(19)

**Europäisches Patentamt**
**European Patent Office**
**Office européen des brevets**

(11)  **EP 4 107 499 B1**

(12)  **EUROPÄISCHE PATENTSCHRIFT**

(45) Veröffentlichungstag und Bekanntmachung des Hinweises auf die Patenterteilung:
**12.02.2025 Patentblatt 2025/07**

(21) Anmeldenummer: **20837985.9**

(22) Anmeldetag: **17.12.2020**

(51) Internationale Patentklassifikation (IPC):
**G01K 11/20** (2006.01) **G01K 13/08** (2006.01)

(52) Gemeinsame Patentklassifikation (CPC):
**G01K 11/20; G01K 13/08**

(86) Internationale Anmeldenummer:
**PCT/EP2020/086824**

(87) Internationale Veröffentlichungsnummer:
**WO 2021/164924 (26.08.2021 Gazette 2021/34)**

(54) **VERFAHREN UND VORRICHTUNG ZUR BERÜHRUNGSLOSEN ERFASSUNG DER TEMPERATUR VON EINEM ROTATIONSTEIL EINER ELEKTRISCHEN MASCHINE**

METHOD AND DEVICE FOR CONTACTLESSLY SENSING THE TEMPERATURE OF A ROTATING PART OF AN ELECTRICAL MACHINE

PROCÉDÉ ET DISPOSITIF DE DÉTECTION SANS CONTACT DE LA TEMPÉRATURE D'UNE PARTIE ROTATIVE D'UNE MACHINE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.02.2020 DE 102020202074**

(43) Veröffentlichungstag der Anmeldung:
**28.12.2022 Patentblatt 2022/52**

(73) Patentinhaber: **Vitesco Technologies Germany GmbH**
**93055 Regensburg (DE)**

(72) Erfinder:
• **MIKULEC, Dragan**
**81737 München (DE)**
• **ZIEMANN, Olaf**
**81737 München (DE)**

(74) Vertreter: **Vitesco Technologies**
**Landsberger Straße 187 - Haus D**
**80687 München (DE)**

(56) Entgegenhaltungen:
**DE-A1- 102011 108 382    DE-T2- 69 905 907**

• **BRESSON F ET AL: "Fluorescence temperature sensing on rotating samples in the cryogenic range", REVIEW OF SCIENTIFIC INSTRUMENTS, AIP, MELVILLE, NY, US, vol. 70, no. 7, 1 July 1999 (1999-07-01), pages 3046 - 3051, XP012037552, ISSN: 0034-6748, DOI: 10.1063/1.1149866**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein Verfahren sowie eine Vorrichtung zur berührungslosen Erfassung der Temperatur von einem Rotationsteil einer elektrischen Maschine.

Bei elektrischen Maschinen besteht vielfach der Wunsch die Temperatur von einem Rotor oder anderen rotierenden Teilen im laufenden Betrieb exakt, d.h. auf wenige Grad Celsius (1-5 °C) genau, zu bestimmen. Die genaue Kenntnis der Temperatur ist u.a. für Überwachungszwecke wichtig. Aus der Theorie der elektrischen Maschinen ist bekannt, dass die Rotortemperatur in bestimmten Betriebspunkten die maximale obere Grenztemperatur überschreiten kann. Wird die Temperatur nicht überwacht bzw. die Temperatur nicht exakt bestimmt, kann es zur Schädigung der elektrischen Maschine kommen.

Das Dokument DE 10 2011 108 382 A1 beschreibt eine elektrische Maschine umfassend einen Rotor und einen Stator, wobei wenigstens ein am Rotor angeordnetes und mit ihm thermisch verbundenes Element vorgesehen ist, dessen Absorptionsgrad für einfallende Photonen einer Lichtquelle sich in Abhängigkeit der Temperatur ändert, wobei vorgesehen ist, dass ein vom momentanen Absorptionsgrad des Elements abhängiges Messsignal ermittelt wird, das ein Maß für die Element- bzw. Rotortemperatur darstellt.

Die DE 69 905 907 T2 beschreibt eine Wärmedämmschicht mit eingebettetem Thermolumineszenz-Indikatorwerkstoff. Es ist vorgesehen, dass auf einem Maschinenbauteil, insbesondere auf einer Schaufel einer Gasturbine, eine hitzebeständige Beschichtung aufgebracht wird, die ein Indikatormaterial umfasst. Bedingt dadurch, dass das Indikatormaterial in der Beschichtung integriert ist, weist es eine erhöhte Beständigkeit gegen Erosion oder Hitzeschock auf.

Es ist die Aufgabe der Erfindung, Maßnahme anzugeben, mittels derer die Temperatur und die Drehposition eines Rotationsteils einer elektrischen Maschine mit moderatem Aufwand präzise ermittelbar ist.

Die Lösung der vorliegenden Erfindung erfolgt durch ein Verfahren mit den Merkmalen des Anspruchs 1. Die Lösung der Aufgabe erfolgt ferner durch eine Vorrichtung mit Merkmalen des Anspruchs 7. Bevorzugte Ausgestaltungen der Erfindung sind in den Unteransprüchen, in der Beschreibung und den Figuren beschrieben, wobei weitere in den Unteransprüchen und/oder in der Beschreibung und/oder den Figuren beschriebene beziehungsweise gezeigte Merkmale einzeln oder in einer beliebigen Kombination einen Gegenstand der Erfindung darstellen können, wenn sich aus dem Kontext nicht eindeutig das Gegenteil ergibt.

Gegenstand der vorliegenden Erfindung ist ein Verfahren zur berührungslosen Erfassung der Temperatur von einem bezüglich einer Rotationsachse rotierbar gelagerten Rotationsteil einer elektrischen Maschine mittels einer Markierung mit fluoreszierenden Markierungsstrukturen, die in mindestens einer ringförmigen Anordnung um die Rotationsachse verteilt auf dem Rotationsteil angeordnet und mit diesem thermisch verbunden sind, wobei die mindestens eine Anordnung der fluoreszierenden Markierungsstrukturen eine Codierung in Art eines Strichcodes bildet, einer Lichtquelle zum Anregen der fluoreszierenden Markierungsstrukturen und mindestens eines Lichtsensors zur Detektion von Fluoreszenzlicht, das aufgrund der Anregung der fluoreszierenden Markierungsstrukturen emittiert wird, wobei daraus eine mit einer temperaturabhängigen Abklingzeitkonstante $\tau$ des Materials der fluoreszierenden Markierungsstrukturen korrelierende Größe ermittelt wird und über diese die Temperatur des Rotationsteils bestimmt wird.

Kern der Erfindung ist, dass die Temperatur des rotierenden Rotationsteils unter Ausnutzung des physikalischen Effektes, dass die Abklingzeitkonstante von einem fluoreszierenden Körper temperaturabhängig ist, für einen großen Drehzahlbereich - bis an den Stillstand heran - , erfasst werden kann. Ein weiteres Merkmal der Erfindung ist, dass die Temperatur berührungslos erfasst werden kann und somit auch sehr heiße Objekte mit einer Temperatur von bis zu 1000 °C thermisch erfasst werden können.

Das Rotationsteil ist ein drehendes Teil der elektrischen Maschine. In der Regel weist die elektrische Maschine einen Rotor und einen Stator auf, wobei das Rotationsteil dann insbesondere besagter Rotor ist.

Durch das Verfahren bzw. die Verwendung einer entsprechenden Vorrichtung zur berührungslosen Erfassung der Temperatur von einem Rotationsteil einer elektrischen Maschine kann die Temperatur mit einer sehr hohen stationären Genauigkeit ermittelt werden. Die Größenordnung liegt hier bei ca. 1-5 Grad Celsius.

Dadurch ergeben sich für den Anwendungsfall der elektrischen Maschinen und ganz besonders für die Permanentmagnet-Synchronmaschine (PSM) die nachfolgend beschriebenen Vorteile:

A) Senkung der Gesamtkosten: Die Temperaturklasse von in der elektrischen Maschine verwendeter Magnete kann gesenkt werden, da durch die exakte (ausreichende) Bestimmung der Rotortemperatur keine Sicherheitsreserve mehr benötigt wird. Die Annahme ist zulässig, wenn von einer elektrischen Leistung in der Größenordnung von 150-250KW bei elektrischen Maschinen ausgegangen werden kann.

B) Leistungskompensation: Der Leistungsabfall bei der PSM, kann im Feldschwachbereich durch Stromanhebung kompensiert werden. Der Leistungsabfall resultiert aufgrund der Drehmomentabsenkung, welche wiederum aufgrund der Polradabsenkung resultiert. Die Polradabsenkung wiederum resultiert aufgrund der Erwärmung der Magnete im Rotor. Die Polradabsenkung und damit die Drehmoment- und Leistungsabsenkung nimmt mit zunehmender Drehzahl zu, wenn sie nicht kompensiert wird. Die Stromkompensation erfolgt beispielsweise mittels der feldorientierten Regelung der permanenterregten Synchronmaschine durch Anhebung des Statorstroms mittels der Leistungselektronik.

C) Komponentenschutz: Durch die genaue Kenntnis der Rotortemperatur können bessere Überwachungs- und Derating-Strategien in der Funktions-Software entwickelt und implementiert werden. Mit den aus dem Stand der Technik bekannten Verfahren zur Rotortemperaturerfassung wird mangels exakter (ausreichender) Kenntnis der Rotortemperatur zu früh ins Derating geschaltet.

D) Verbesserung des funktionalen Sicherheitskonzepts: Die Drehmomentüberwachung auf Drehmomentfehler kann durch die genaue Kenntnis der Rotortemperatur verbessert werden. Die Verbesserung resultiert in einemengeren Toleranzband (Vergleich zw. Soll- und Istmoment). Das engere Toleranzband führt zu einer kürzeren Erkennungs- und Abschaltzeit.

E) Reduzierung der gesamten Software-Applikationszeit: Die aus dem Stand der Technik bekannten Verfahren, welches die Rotortemperatur mittels einem Rotortemperaturmodel (Schätzmodel) ermitteln, erfordern eine Vielzahl von Fahrzeugmessungen und Erprobungen in Heiß- und Kaltlandversuchen. Durch eine exakte Rotortemperaturbestimmung mittels des hier dargestellten Verfahrens, reduziert sich der Software-Applikationsaufwand in einem erheblichen Umfang. Die Folge: Zeit- und Kosteneinsparung.

Bei dem Verfahren ist bevorzugt vorgesehen, dass die fluoreszierender Markierungsstrukturen durch die Rotation des Rotationsteils an der Lichtquelle und anschließend an dem Lichtsensor oder nacheinander an den Lichtsensoren vorbeigeführt werden.

Ein weiteres Merkmal ist, dass durch eine geschickte Anordnung und Anzahl der Lichtsensoren die Temperaturgenauigkeit erhöht wird und zusätzlich die Drehzahl und die Drehrichtung erfasst werden kann.

Erfindungsgemäß bildet die Anordnung der fluoreszierenden Markierungsstrukturen eine Codierung in Art eines Strichcodes. Auf diese Weise ist es möglich auch die Drehposition des Rotationsteils zu bestimmen.

Gemäß einer weiteren bevorzugten Ausgestaltung der Erfindung ist vorgesehen, dass die Markierung zwei parallel verlaufende Anordnungen mit unterschiedlichen fluoreszierenden Markierungsstrukturen aufweist, die mittels der Lichtquelle gemeinsam angeregt werden.

Gemäß noch einer weiteren bevorzugten Ausgestaltung der Erfindung wird aus dem Signal des detektierten Fluoreszenzlichts zusätzlich auch eine Drehposition und/oder Drehzahl und/oder Drehrichtung des Rotationsteils bestimmt.

Weiterhin ist mit Vorteil vorgesehen, dass die fluoreszierenden Markierungsstrukturen als fluoreszierendes Material Rubin, insbesondere in Form einer Rubinpulverbeschichtung, aufweisen.

Gemäß einer weiteren bevorzugten Ausgestaltung der Erfindung ist vorgesehen, dass die Lichtquelle als Leucht- oder Laserdiode (LED) ausgebildet ist und/oder der mindestens eine Lichtsensor als Photoempfänger, insbesondere Photodiode (PD) ausgebildet ist.

Gemäß noch einer weiteren bevorzugten Ausgestaltung der Erfindung wird die mit der temperaturabhängigen Abklingzeitkonstante $\tau$ des Materials der fluoreszierenden Markierungsstrukturen korrelierende Größe vorab durch eine Referenzmessung mittels der Markierung, der Lichtquelle und des mindestens einen Lichtsensors ermittelt.

Gegenstand der vorliegenden Erfindung ist weiterhin eine Vorrichtung zur berührungslosen Erfassung der Temperatur von einem bezüglich einer Rotationsachse rotierbar gelagerten Rotationsteil einer elektrischen Maschine, mit einer Markierung mit fluoreszierenden Markierungsstrukturen, die in mindestens einer ringförmigen Anordnung um die Rotationsachse verteilt auf dem Rotationsteil angeordnet und mit diesem thermisch verbunden sind, wobei die mindestens eine Anordnung der fluoreszierenden Markierungsstrukturen eine Codierung in Art eines Strichcodes bildet,

- einer Lichtquelle zum Anregen der fluoreszierenden Markierungsstrukturen,
- mindestens einem Lichtsensor zur Detektion von Fluoreszenzlicht, das aufgrund der Anregung der fluoreszierenden Markierungsstrukturen emittiert wird, und

einer Auswerteeinheit, die eingerichtet ist, aus dem detektierten Fluoreszenzlicht eine mit einer temperaturabhängigen Abklingzeitkonstante $\tau$ des Materials der fluoreszierenden Markierungsstrukturen korrelierende Größe zu ermitteln und über diese Größe die Temperatur des Rotationsteils zu bestimmen.

Die im Zusammenhang mit dem vorstehend genannten Verfahren zur berührungslosen Erfassung der Temperatur von einem bezüglich einer Rotationsachse rotierenden Rotationsteil genannten vorteilhaften Ausgestaltungen gelten sinngemäß auch hier für die Vorrichtung. Diese ist insbesondere zur Durchführung des vorstehend genannten Verfahrens eingerichtet.

Gemäß einer bevorzugten Ausgestaltung der erfindungsgemäßen Vorrichtung ist eine feste räumliche Anordnung der Lichtquelle, des mindestens einen Lichtsensors und der Rotationsachse vorgesehen, bei der die fluoreszierenden Markierungsstrukturen der mindestens einen Anordnung durch ein Rotieren des Rotationsteils an der Lichtquelle und anschließend an dem Lichtsensor oder nacheinander an den Lichtsensoren vorbeigeführt werden können.

Gemäß einer weiteren bevorzugten Ausgestaltung der erfindungsgemäßen Vorrichtung ist die Auswerteeinheit eingerichtet, die mit der Abklingzeitkonstante $\tau$ des Materials der fluoreszierenden Markierungsstrukturen korrelierende Größe vorab durch eine Referenzmessung mittels der Markierung, der Lichtquelle und des mindestens einen Lichtsensors zu ermitteln.

Erfindungsgemäß ist die mindestens eine Anordnung der fluoreszierenden Markierungsstrukturen eine Codierung, die eine Art Strichcode, bildet.

Gemäß noch einer weiteren bevorzugten Ausgestaltung der erfindungsgemäßen Vorrichtung ist vorgesehen, dass das Rotationsteil ein Rotor oder zumindest eine Rotorkomponente der elektrischen Maschine ist. Die elektrische Maschine ihrerseits ist insbesondere eine Permanentmagnet-Synchronmaschine (PSM).

Die Erfindung betrifft schließlich auch eine elektrische Maschine mit einem bezüglich einer Rotationsachse rotierbar gelagerten Rotationsteil und einer vorstehend beschriebenen Vorrichtung zur berührungslosen Erfassung der Temperatur des Rotationsteils. Das Rotationsteil ist insbesondere ein Rotor der elektrischen Maschine. Die elektrische Maschine ihrerseits ist insbesondere eine Permanentmagnet-Synchronmaschine (PSM).

Nachfolgend wird die Erfindung anhand bevorzugter Ausführungsbeispiele in Zeichnungen gezeigt und nachfolgend näher beschrieben. Dabei zeigt

Fig. 1 eine Vorrichtung zur Temperatur-Erfassung eines Rotationsteils einer elektrischen Maschine gemäß einer ersten Ausführungsform der Erfindung,

Fig. 2 Graphen der entsprechenden optischen Signale bezogen auf eine einzelne fluoreszierende Markierungsstruktur,

Fig. 3 Graphen von relevanten Größen bei der Ermittlung einer mit der temperaturabhängigen Abklingzeitkonstante $\tau$ des Materials des fluoreszierenden Elements korrelierende Größe und

Fig. 4 eine Vorrichtung zur Temperatur-Erfassung gemäß einer zweiten Ausführungsform der Erfindung.

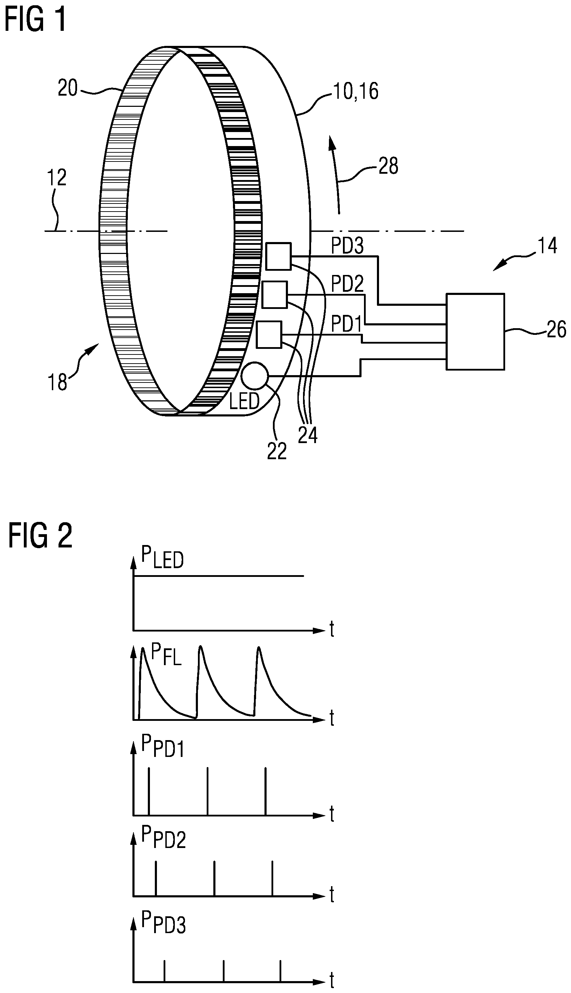

Die Fig. 1 zeigt ein Rotationsteil 10 einer elektrischen Maschine, welches bezüglich einer Rotationsachse 12 rotierbar gelagert ist, sowie eine Vorrichtung 14 zur berührungslosen Erfassung der Temperatur T des rotierenden Rotationsteils 10. Das Rotationsteil 10 ist insbesondere ein Rotor 16 der elektrischen Maschine.

Die Vorrichtung 14 zur berührungslosen Erfassung der Temperatur von dem Rotationsteil 10 umfasst eine Markierung 18 mit fluoreszierenden Markierungsstrukturen, die in mindestens einer ringförmigen Anordnung 20 um die Rotationsachse 12 verteilt auf dem Rotationsteil 10 angeordnet und mit diesem thermisch verbunden sind, eine Lichtquelle 22 zum Anregen der fluoreszierenden Markierungsstrukturen, mindestens einen Lichtsensor 24 zur Detektion von Fluoreszenzlicht, das aufgrund der Anregung der fluoreszierenden Markierungsstrukturen emittiert wird, und

eine Auswerteeinheit 26, die eingerichtet ist, aus dem detektierten Fluoreszenzlicht eine mit einer temperaturabhängigen Abklingzeitkonstante $\tau$ des Materials der fluoreszierenden Markierungsstrukturen korrelierende Größe zu ermitteln und über diese Größe die Temperatur des Rotationsteils 10 zu bestimmen.

Die Verknüpfung zwischen der mit einer temperaturabhängigen Abklingzeitkonstante $\tau$ des Materials der fluoreszierenden Markierungsstrukturen korrelierende Größe und der Temperatur ist beispielsweise in einer (nicht gezeigten) Datenbank der Auswerteeinheit 26 hinterlegt.

Die räumliche Anordnung der Lichtquelle 22, der Lichtsensoren 24 und der Rotationsachse 12 des Rotationsteils 10 ist innerhalb der elektrischen Maschine so festgelegt, dass die fluoreszierenden Strukturen durch ein Rotieren des Rotationsteils 12 an der Lichtquelle 22 und anschließend nacheinander an den Lichtsensoren 24 vorbeigeführt werden (Pfeil 28). Die Lichtquelle 22 und die Lichtsensoren 24 sind dazu an einem maschinenfesten Teil der elektrischen Maschine, wie etwa einem Gehäuse oder einem dem Rotor 16 entsprechenden Stator (nicht explizit gezeigt) angeordnet/befestigt.

Die Lichtquelle 22 ist hier im Beispiel als Leucht- oder Laserdiode (LED) ausgebildet und die Lichtsensoren 24 sind als Photoempfänger, genauer gesagt Photodioden (PD), ausgebildet. Die fluoreszierenden Strukturen weisen als fluoreszierendes Material Rubin, insbesondere in Form einer Pulverbeschichtung, auf.

Die Fig. 2 zeigt nun Graphen der entsprechenden optischen Signale, wobei jeweils eine Signal-Intensität, hier als auf die Fläche bezogene Leistung P angegeben, über der Zeit t dargestellt ist. Der obere Graph zeigt das konstante Signal der Lichtquelle 22. Der mittlere Graph zeigt das Fluoreszenz-Signal einer der fluoreszierenden Strukturen und die unteren drei Graphen die diskreten Signale der Lichtsensoren 24. Diese diskreten Signale werden von der jeweiligen Position der fluoreszierenden Struktur bezüglich der Lichtquelle 22 und der Lichtsensoren 24 getriggert.

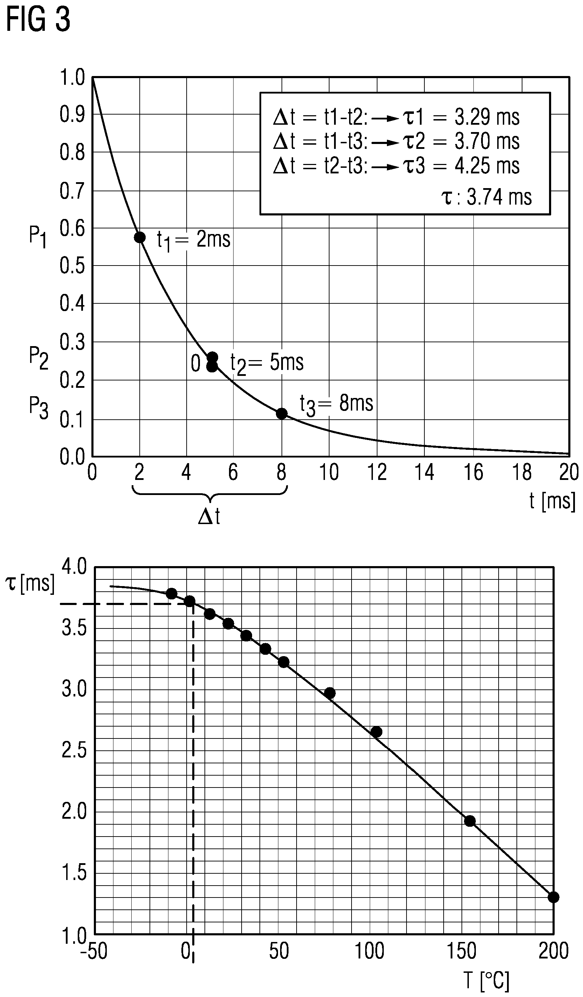

Die Fig. 3 zeigt zwei Graphen von relevanten Größen bei der Ermittlung der mit der temperaturabhängigen Abklingzeitkonstante $\tau$ des Materials des fluoreszierenden Elements korrelierende Größe und der Temperatur.

Über die von den Lichtsensoren 24 detektierte Intensität des Fluoreszenzlichts und die Zeitdifferenz zwischen den von den unterschiedlichen Sensoren 24 detektierten Signalen wird die mit der Abklingzeitkonstante τ des Materials des fluoreszierenden Elements korrelierende Größe ermittelt (linker Graph) und über diese Größe und die Temperaturabhängigkeit der Abklingzeitkonstante τ die Temperatur der fluoreszierenden Struktur und des damit thermisch verbundenen Rotationsteils 10 bestimmt.

Im vorliegenden Fall der Fig. 3 gilt beispielsweise in Bezug auf den ersten und einen dritten Lichtsensor 24:

$$\tau = \frac{-\Delta t}{\ln \left(\frac{P1}{P3}\right)}$$

Im konkret gezeigten Beispiel also:

$$\tau = 6ms/\ln(0{,}58/0{,}115) = 3{,}7ms$$

Mit dem im zweiten Graph der Fig. 3 gegebenen Zusammenhang ergibt sich eine Temperatur von 7°C.

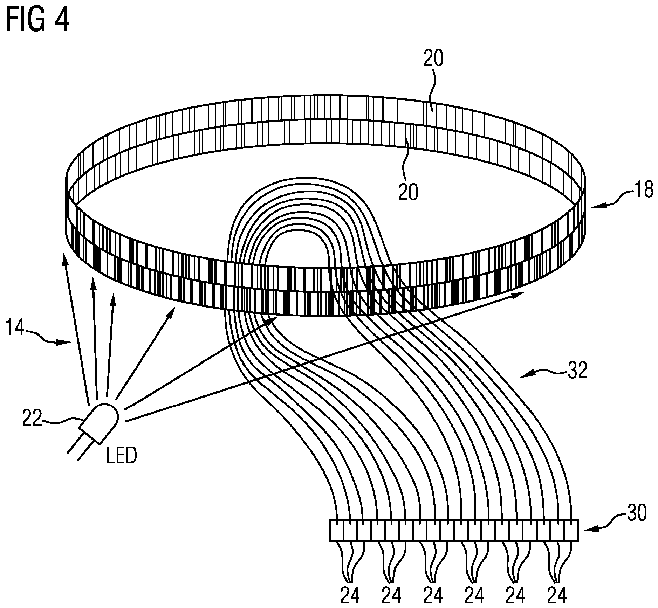

Die Fig. 4 zeigt eine alternative Ausgestaltung der Vorrichtung 14 zur Temperatur-Erfassung. Die Lichtquelle 22 wird gepulst betrieben und beleuchtet die gesamte Markierung 18. Diese Markierung 18 weist bei diese Ausführungsform zwei parallel verlaufende Anordnungen 20 unterschiedlicher fluoreszierender Markierungsstrukturen auf, die je einen Strich-Code bilden. Genauer gesagt handelt es sich in diesem speziellen Fall um zwei parallel verlaufende Anordnungen 20 fluoreszierender Markierungsstrukturen, die zwar gleich aufgebaut, jedoch antiparallel ausgerichtet sind.

Die Lichtsensoren 24 sind in Form eines CCD-Sensors 30 bzw. einer CCD-Zeile realisiert und über Lichtleitelemente 32 an entsprechenden "Auslesepositionen" an die fluoreszierenden Markierungsstrukturen der Markierung 18 optisch gekoppelt.

Im Stillstand und bei jeder Umdrehung wird die Position per Auslesen der Kodeposition mittels der Lichtsensoren 24 ermittelt. Die Drehzahl wird mathematisch durch Ableitung aus der Position ermittelt. Die Auflösung ist variabel und hängt davon ab, welchen Strichcode man verwendet - beispielsweise kann eine Auflösung von 9 Bit (0,70°), entweder mit einem 512er Kode der mit Interpolation realisiert werden.

Zur Messung der Temperatur wird das Summensignal der Lichtsensoren/Photodetektoren verwendet, wobei mittels der CCD-Zeile 30 immer die beide ringförmigen Anordnungen 20 abgetastet werden.

Im Folgenden sollen neben dem Kern der Erfindung, auch Vorteile sowie der "Best-Mode" der Erfindung noch einmal mit anderen Worten beschrieben werden:
Kern der Erfindungsmeldung ist, dass die Temperatur, Drehzahl, Drehrichtung und sogar die Position berührungslos an einem rotierenden Teil erfasst werden kann unter Ausnutzung des physikalischen Effektes, dass die Abklingzeitkonstante von einem fluoreszierenden Körper temperaturabhängig ist. Die Temperaturmessung geht mit diesem Verfahren/dieser Vorrichtung für den gesamten Drehzahlbereich d.h. auch im Stillstand.

Durch die Verwendung der Vorrichtung 14 zur berührungslosen Erfassung der Temperatur von einem Rotationsteil 10 einer elektrischen Maschine kann die Temperatur mit einer sehr hohen stationären Genauigkeit ermittelt werden. Die Größenordnung liegt hier bei ca. 1-5 Grad Celsius.

Durch das hier beschriebene Messprinzip kann ein sogenannter Kombi-Sensor (engl. Smart Sensor) aufgebaut werden, womit bis zu 4 physikalische Messgrößen ermittelt werden können. Dieser Kombi-Sensor kann besonders vorteilhaft für den Anwendungsfall der elektrischen Maschine und insbesondere für den Anwendungsfall der Permanentmagnet Synchronmaschine (PSM) eingesetzt werden. Die Vorteile im Einzelnen: Reduktion der Gesamtkosten, Erhöhung der Leistung, Verbesserung des Funktionalen Sicherheitskonzepts und des Komponentenschutzes.

Bezugszeichen

| 10 | Rotationsteil |
|---|---|
| 12 | Rotationsachse |
| 14 | Vorrichtung |
| 16 | Rotor |
| 18 | Markierung |
| 20 | ringförmige Markierung Struktur-Anordnung |
| 22 | Lichtquelle |
| 24 | Lichtsensor |
| 26 | Auswerteeinheit |
| 28 | Pfeil |
| 30 | CCD-Sensor |
| 32 | Lichtleitelemente |
| T | Temperatur des Rotationsteils |
| τ | Abklingzeitkonstante |

**Patentansprüche**

1. Verfahren zur berührungslosen Erfassung der Temperatur von einem bezüglich einer Rotationsachse (12) rotierbar gelagerten Rotationsteil (10) einer elektrischen Maschine mittels

- einer Markierung (18) mit fluoreszierenden Markierungsstrukturen, die in mindestens einer ringförmigen Anordnung (20) um die Rotationsachse (12) verteilt auf dem Rotationsteil (10) angeordnet und mit diesem thermisch verbunden sind, wobei die mindestens eine Anordnung (20) der fluoreszierenden Markierungsstrukturen eine Codierung in Art eines Strichcodes bildet,
- einer Lichtquelle (22) zum Anregen der fluoreszierenden Markierungsstrukturen und
- mindestens eines Lichtsensors (24) zur Detektion von Fluoreszenzlicht, das aufgrund der Anregung der fluoreszierenden Markierungsstrukturen emittiert wird, wobei daraus eine mit einer temperaturabhängigen Abklingzeitkonstante $\tau$ des Materials der fluoreszierenden Markierungsstrukturen korrelierende Größe ermittelt wird und über diese die Temperatur des Rotationsteils (10) bestimmt wird.

2. Verfahren nach Anspruch 1, **dadurch gekennzeichnet, dass** die fluoreszierender Markierungsstrukturen der Anordnung (20) durch die Rotation des Rotationsteils (10) an der Lichtquelle (22) und anschließend an dem Lichtsensor (24) oder nacheinander an den Lichtsensoren (24) vorbeigeführt werden.

3. Verfahren nach einem der Ansprüche 1 oder 2, **dadurch gekennzeichnet, dass** die Markierung (18) zwei parallel verlaufende Anordnungen (20) unterschiedlicher fluoreszierender Markierungsstrukturen aufweist, die mittels der Lichtquelle (18) gemeinsam angeregt werden.

4. Verfahren nach einem der Ansprüche 1 bis 3, **dadurch gekennzeichnet, dass** aus dem Signal des detektierten Fluoreszenzlichts weiterhin eine Drehposition und/oder Drehzahl und/oder Drehrichtung des Rotationsteils (10) bestimmt wird.

5. Verfahren nach einem der Ansprüche 1 bis 4, **dadurch gekennzeichnet, dass** die fluoreszierenden Markierungsstrukturen als fluoreszierendes Material Rubin, insbesondere in Form einer Rubinpulverbeschichtung, aufweisen.

6. Verfahren nach einem der Ansprüche 1 bis 5, **dadurch gekennzeichnet, dass** die mit der temperaturabhängigen Abklingzeitkonstante $\tau$ des Materials der fluoreszierenden Markierungsstrukturen korrelierende Größe vorab durch eine Referenzmessung mittels der Markierung (18), der Lichtquelle (22) und des mindestens einen Lichtsensors (24) ermittelt wird.

7. Vorrichtung (14) zur berührungslosen Erfassung der Temperatur von einem bezüglich einer Rotationsachse (12) rotierbar gelagerten Rotationsteil (10) einer elektrischen Maschine, mit

- einer Markierung (18) mit fluoreszierenden Markierungsstrukturen, die in mindestens einer ringförmigen Anordnung (20) um die Rotationsachse (12) verteilt auf dem Rotationsteil (10)

angeordnet und mit diesem thermisch verbunden sind, wobei die mindestens eine Anordnung (20) der fluoreszierenden Markierungsstrukturen eine Codierung in Art eines Strichcodes bildet,
- einer Lichtquelle (22) zum Anregen der fluoreszierenden Markierungsstrukturen,
- mindestens einem Lichtsensor (24) zur Detektion von Fluoreszenzlicht, das aufgrund der Anregung der fluoreszierenden Markierungsstrukturen emittiert wird, und

einer Auswerteeinheit (26), die eingerichtet ist, aus dem detektierten Fluoreszenzlicht eine mit einer temperaturabhängigen Abklingzeitkonstante $\tau$ des Materials der fluoreszierenden Markierungsstrukturen korrelierende Größe zu ermitteln und über diese Größe die Temperatur des Rotationsteils (10) zu bestimmen.

8. Vorrichtung nach Anspruch 7, **gekennzeichnet durch** eine feste räumliche Anordnung der Lichtquelle (22), des mindestens einen Lichtsensors (24) und der Rotationsachse (12), bei der die fluoreszierenden Markierungsstrukturen der der Anordnung (20) durch ein Rotieren des Rotationsteils (10) an der Lichtquelle (22) und anschließend an dem Lichtsensor (24) oder nacheinander an den Lichtsensoren (24) vorbeiführbar sind.

**Claims**

1. Method for non-contact sensing of the temperature of a rotating part (10) of an electric machine, which rotating part is mounted rotatably with respect to an axis (12) of rotation, by means of

- a marking (18) with fluorescent marking structures which are arranged on the rotating part (10) in a manner distributed in at least one ring-shaped arrangement (20) around the axis (12) of rotation and are thermally connected to said rotating part, wherein the at least one arrangement (20) of the fluorescent marking structures forms a barcode-type coding,
- a light source (22) for exciting the fluorescent marking structures and
- at least one light sensor (24) for detecting fluorescent light emitted on account of the excitation of the fluorescent marking structures, from which a variable correlating with a temperature-dependent decay time constant $\tau$ of the material of the fluorescent marking structures is ascertained and the temperature of the rotating part (10) is determined by way of this variable.

**2.** Method according to Claim 1, **characterized in that** the fluorescent marking structures of the arrangement (20) are guided past the light source (22) and subsequently past the light sensor (24) or successively past the light sensors (24) by the rotation of the rotating part (10).

**3.** Method according to either of Claims 1 and 2, **characterized in that** the marking (18) has two parallel extending arrangements (20) of different fluorescent marking structures, which are excited jointly by means of the light source (18).

**4.** Method according to any of Claims 1 to 3, **characterized in that** furthermore a rotational position and/or rotational speed and/or rotational direction of the rotating part (10) are/is determined from the signal of the detected fluorescent light.

**5.** Method according to any of Claims 1 to 4, **characterized in that** the fluorescent marking structures comprise ruby, in particular in the form of a ruby powder coating, as fluorescent material.

**6.** Method according to any of Claims 1 to 5, **characterized in that** the variable correlating with the temperature-dependent decay time constant $\tau$ of the material of the fluorescent marking structures is ascertained beforehand by a reference measurement by means of the marking (18), the light source (22) and the at least one light sensor (24).

**7.** Device (14) for non-contact sensing of the temperature of a rotating part (10) of an electric machine, which rotating part is mounted rotatably with respect to an axis (12) of rotation, with

- a marking (18) with fluorescent marking structures which are arranged on the rotating part (10) in a manner distributed in at least one ring-shaped arrangement (20) around the axis (12) of rotation and are thermally connected to said rotating part, wherein the at least one arrangement (20) of the fluorescent marking structures forms a barcode-type coding,
- a light source (22) for exciting the fluorescent marking structures,
- at least one light sensor (24) for detecting fluorescent light emitted on account of the excitation of the fluorescent marking structures, and

an evaluation unit (26) configured to ascertain from the detected fluorescent light a variable correlating with a temperature-dependent decay time constant $\tau$ of the material of the fluorescent marking structures and to determine the temperature of the rotating part (10) by way of this variable.

**8.** Device according to Claim 7, **characterized by** a fixed spatial arrangement of the light source (22), the at least one light sensor (24) and the axis (12) of rotation in which the fluorescent marking structures of the arrangement (20) are guidable past the light source (22) and subsequently past the light sensor (24) or successively past the light sensors (24) by rotation of the rotating part (10).

**Revendications**

**1.** Procédé de détection sans contact de la température d'une pièce rotative (10) d'une machine électrique, montée rotative par rapport à un axe de rotation (12), au moyen

- d'un marquage (18) comprenant des structures de marquage fluorescentes qui sont agencées de manière répartie autour de l'axe de rotation (12) selon au moins un agencement (20) annulaire sur la pièce rotative (10) et reliées thermiquement à celle-ci, ledit au moins un agencement (20) des structures de marquage fluorescentes formant un codage à la manière d'un code-barres,
- d'une source de lumière (22) pour exciter les structures de marquage fluorescentes, et
- d'au moins un capteur de lumière (24) pour détecter la lumière de fluorescence qui est émise suite à l'excitation des structures de marquage fluorescentes, cela permettant de déterminer une grandeur corrélée à une constante de temps de décroissance $\tau$ du matériau des structures de marquage fluorescentes dépendant de la température, et par l'intermédiaire de ladite grandeur, de déterminer la température de la pièce rotative (10).

**2.** Procédé selon la revendication 1, **caractérisé en ce que** les structures de marquage fluorescentes de l'agencement (20) sont amenées à passer, du fait de la rotation de la pièce rotative (10), devant la source de lumière (22) et ensuite devant le capteur de lumière (24) ou successivement devant les capteurs de lumière (24).

**3.** Procédé selon l'une quelconque des revendications 1 ou 2, **caractérisé en ce que** le marquage (18) comporte deux agencements (20) s'étendant parallèlement de structures de marquage fluorescentes différentes, qui sont excitées simultanément au moyen de la source de lumière (18).

**4.** Procédé selon l'une quelconque des revendications 1 à 3, **caractérisé en ce qu'**à partir du signal de la lumière de fluorescence détectée, une position de rotation et/ou une vitesse de rotation et/ou un sens de rotation de la pièce rotative (10) est également déterminé.

5. Procédé selon l'une quelconque des revendications 1 à 4, **caractérisé en ce que** les structures de marquage fluorescentes comportent du rubis en tant que matériau fluorescent, notamment sous la forme d'une revêtement de poudre de rubis.

6. Procédé selon l'une quelconque des revendications 1 à 5, **caractérisé en ce que** la grandeur corrélée à la constante de temps de décroissance $\tau$ du matériau des structures de marquage fluorescentes dépendant de la température est déterminée au préalable par une mesure de référence au moyen du marquage (18), de la source de lumière (22) et dudit au moins un capteur de lumière (24).

7. Dispositif (14) de détection sans contact de la température d'une pièce rotative (10) d'une machine électrique, montée rotative par rapport à un axe de rotation (12), comprenant

    - un marquage (18) comprenant des structures de marquage fluorescentes qui sont agencées de manière répartie autour de l'axe de rotation (12) selon au moins un agencement (20) annulaire sur la pièce rotative (10) et reliées thermiquement à celle-ci, ledit au moins un agencement (20) des structures de marquage fluorescentes formant un codage à la manière d'un code-barres,
    - une source de lumière (22) pour exciter les structures de marquage fluorescentes,
    - au moins un capteur de lumière (24) pour détecter la lumière de fluorescence qui est émise suite à l'excitation des structures de marquage fluorescentes, et

    une unité d'évaluation (26) qui est conçue pour déterminer une grandeur corrélée à une constante de temps de décroissance $\tau$ du matériau des structures de marquage fluorescentes dépendant de la température, et par l'intermédiaire de ladite grandeur, pour déterminer la température de la pièce rotative (10).

8. Dispositif selon la revendication 7, **caractérisé par** un agencement fixe dans l'espace de la source de lumière (22), dudit au moins un capteur de lumière (24) et de l'axe de rotation (12), dans lequel les structures de marquage fluorescentes de l'agencement (20) peuvent être amenées à passer, du fait de la rotation de la pièce rotative (10), devant la source lumineuse (22) et ensuite devant le capteur de lumière (24) ou successivement devant les capteurs de lumière (24).

FIG 1

FIG 2

# FIG 3

$\Delta t = t1\text{-}t2: \longrightarrow \tau 1 = 3.29$ ms
$\Delta t = t1\text{-}t3: \longrightarrow \tau 2 = 3.70$ ms
$\Delta t = t2\text{-}t3: \longrightarrow \tau 3 = 4.25$ ms

$\tau : 3.74$ ms

FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011108382 A1
- DE 69905907 T2